# FASCICULE DE BREVET EUROPEEN

(11) **EP 4 452 589 B1**
(45) Date de publication et mention de la délivrance du brevet: **04.02.2026**
(21) Numéro de dépôt: 22839875.6
(22) Date de dépôt: 13.12.2022
(51) Int. Cl.: B29C 33/48, F01D 25/00, F01D 25/28, F02C 6/08, F02K 3/075, F04D 19/02

(54) **OUTILLAGE ET PROCÉDÉ DE MOULAGE D'UN CONDUIT POUR UNE TURBOMACHINE D'AÉRONEF**
WERKZEUG UND VERFAHREN ZUM FORMEN EINES KANALS FÜR EIN FLUGZEUGTURBINENTRIEBWERK
TOOL AND METHOD FOR MOULDING A DUCT FOR AN AIRCRAFT TURBINE ENGINE

(30) Priorité: 21.12.2021 FR 2114054
(43) Date de publication de la demande: 30.10.2024
(73) Titulaire: SAFRAN AIRCRAFT ENGINES, 75015 Paris (FR)
(72) Inventeur: BIENVENU, Steven Gérard Joseph, 77550 MOISSY-CRAMAYEL (FR)
(74) Mandataire: Gevers & Orès
(86) Numéro de dépôt international: PCT/FR2022/052328
(87) Numéro de publication internationale: WO 2023/118690

(56) Documents cités:
- CN-U- 206 937 859
- FR-A1- 3 094 265
- US-A1- 2013 294 924
- US-A1- 2015 354 396

## Description

### Domaine technique de l'invention

La présente invention concerne un outillage et un procédé de moulage d'un conduit pour une turbomachine d'aéronef.

### Arrière-plan technique

L'arrière-plan technique comprend notamment les documents FR-A1-3 094 265, CN-U-206 937 859, US-A1-2013/294924 et US-A1-2015/354396.

Il est connu, pour fabriquer un conduit en matériau composite pour une turbomachine d'aéronef, d'utiliser un outillage comprenant une membrane souple sur laquelle est disposée une préforme fibreuse et sèche, ainsi qu'un moule externe, composé de plusieurs parties, qui se place autour de la préforme fibreuse et sèche.

La préforme fibreuse sèche, en fibre de carbone et/ou fibre de verre, est disposée sur la membrane souple gonflée, puis les différentes parties du moule sont assemblées autour de l'ensemble membrane/préforme. Une fois la préforme placée dans l'outillage, une surface interne de la préforme se trouve contre la membrane souple et une surface externe de la préforme se trouve contre le moule externe.

Les différentes parties de l'outillage sont alors maintenues entres elles. Une fois l'ensemble fixé, l'outillage est chauffé et de la résine polymérisable destinée à imprégner et rigidifier la préforme est injectée dans l'outillage. La résine est injectée dans la préforme à l'aide d'un piston d'injection, avec un vide maintenu au niveau de la préforme. Une fois la préforme complètement injectée, les pistons cessent d'exercer une quelconque pression, et l'outillage continue de chauffer pour réaliser la polymérisation de la résine. Une fois le cycle de chauffage terminé, la pièce peut alors être démoulée.

Cependant, l'outillage de l'art antérieur présente de nombreux désavantages.

En particulier, dans le but de chauffer l'ensemble de la préforme lors du cycle de chauffage, il est nécessaire de chauffer l'ensemble du moule. L'outillage comporte ainsi un système de chauffage intégré dans les pièces du moule, notamment des crayons chauffants, c'est-à-dire des résistances disposées dans différents endroits des différentes parties du moule. La présence de ce système de chauffage oblige le moule à présenter des dimensions et une masse très importantes rendant notamment sa manipulation difficile.

En outre, le moule étant en acier, son inertie thermique ne permet pas d'avoir une homogénéité thermique correcte au niveau de la résine lors des phases de montée en température et de polymérisation. Cette inhomogénéité a en particulier un impact sur la santé matière et les besoins fonctionnelles de la pièce. L'inhomogénéité entraîne en particulier une mauvaise polymérisation, c'est-à-dire en particulier une température de transition vitreuse et un taux de polymérisation trop bas, ce qui a un impact négatif sur les propriétés mécaniques des matériaux et réduit les caractéristiques mécaniques de la pièce. Cette inhomogénéité peut entrainer également la formation d'indications non désirées, telles des délaminages (séparation physique entre les plis de renforcement, indiquant une discontinuité de résine à l'interface), des porosités, des pincements de fibre et/ou des décalages géométriques entrainant une réduction des caractéristiques mécaniques de la pièces finie, notamment un mauvais taux volumique de fibres pouvant conduire à une mise au rebut de la pièce finie. Par ailleurs, la préforme fibreuse sèche est relativement épaisse avant compactage et injection, ce qui amène des difficultés de fermeture des différentes parties du moule externe et entraine des pincements locaux de fibres, des variations de géométrie sur la pièce finie au-delà des tolérances imposée, ce qui peut empêcher le montage de la pièce finie sur la turbomachine.

De plus la membrane souple ne permet pas d'appliquer une pression suffisante dans toutes les zones de la préforme. Des poches de résines sans renfort fibreux sont créées, créant des abattements mécaniques et réduisant de fait les caractéristiques mécaniques et la durée de vie de la pièce finie. Une mauvaise application de la pression génère aussi des variations élevées des taux volumique de fibres, néfaste aux caractéristiques mécaniques.

Aussi, les préformes en matériau composite présentent une face compatible aux besoins aérodynamiques lorsque cette dernière est contre un moule rigide puisque la résine prend la forme exacte du moule. A l'inverse, une membrane souple ne présente pas une rigidité suffisante pour assurer une rugosité contrôlée et une absence d'ondulations de surface, compatibles avec les exigences aérodynamiques requises. Ainsi, dans le cas où le conduit présente une surface interne qui sera soumise à un flux aérodynamique, son positionnement contre une membrane souple lors de sa fabrication peut provoquer une incompatibilité du conduit avec les exigences aérodynamiques requises, nécessitant alors une intervention d'un opérateur ou la mise au rebut du conduit.

D'autre part, l'outillage de l'art antérieur est très volumineux. En effet, le moule et ses différentes parties se placent à l'extérieur de la préforme. Étant donné que la pièce à réaliser peut mesurer plusieurs dizaines de centimètres et que l'outillage englobe également le système de chauffage, les dimensions de l'outillage peuvent atteindre notamment un mètre de largeur, un mètre de longueur et une hauteur pouvant dépasser le mètre.

De surcroît, l'outillage est très lourd. Par ailleurs, chacune des parties du moule ayant un poids élevé, notamment supérieur à 35 kg, il est nécessaire de réaliser la manipulation des différentes parties moule à l'aide d'engins de manutention.

Également, l'outillage de l'art antérieur étant massif, il n'est possible de produire qu'une seule pièce à la fois.

En outre, chaque moule ne peut produire qu'une seule référence de conduit et qu'un seul conduit à la fois. La multiplication des références de conduit et/ou les besoins en termes de cadence de production entrainent donc une multiplication des moules qu'il est nécessaire d'avoir à disposition.

Enfin, suite à la cuisson de la préforme, le démoulage des différentes parties du moule est très compliqué à cause notamment des angles de dépouilles et des singularités géométriques des différentes pièces.

La présente invention a notamment pour but de résoudre tout ou partie des problèmes précités.

### Résumé de l'invention

L'invention propose à cet effet un outillage de moulage d'un conduit pour une turbomachine d'aéronef, le conduit étant réalisé en matériau composite à base de fibres et comportant une portion tubulaire incurvée dont une extrémité est reliée à un rebord périphérique, cet outillage comportant :
- un socle qui a une forme générale parallélépipédique et dont une surface supérieure comprend une partie centrale évidée et une partie périphérique configurée pour être recouverte par au moins une nappe de fibres pour la réalisation du rebord périphérique du conduit,
- un corps de forme générale allongée et incurvée et comportant une extrémité longitudinale emboîtée de manière amovible dans la partie centrale du socle, ce corps étant configuré pour être recouvert par au moins une nappe de fibres pour la réalisation de la portion tubulaire du conduit, ce corps étant réalisé par un ensemble de premières pièces qui sont montées de manière ajustée les unes contre les autres et qui comprennent une première clef centrale de démoulage qui s'étend d'une extrémité à l'autre du corps et qui est configurée pour être retirée en premier lors d'un démoulage du corps.

Ainsi, l'outillage de l'invention permet de se passer de moule extérieur au conduit en permettant d'une part le positionnement d'une nappe de fibre sur le socle et le corps et d'autre part de retirer le corps et le socle de manière aisée, notamment grâce à la première clef centrale de démoulage et l'emboitage de manière amovible du corps dans le socle. L'invention permet ainsi d'éviter les problèmes de l'art antérieur liés aux moules cités précédemment et en particulier :
- les contraintes dimensionnelles et de formes du conduit sont respectées car l'outillage est placé avant le drapage de la nappe de fibre sur le socle et le corps, ce qui évite les difficultés à fermer le moule ;
- le démoulage est plus simple car une seule pièce, la première clef centrale, permet de débloquer toutes les autres premières pièces en place ;
- les pièces abîmées de l'outillage peuvent être remplacées individuellement ;
- l'outillage présente une masse très inférieure à celle de l'outillage de l'art antérieur, facilitant notamment la manutention ;
- l'outillage se trouvant à l'intérieur de la préforme, il est possible d'obtenir une meilleure homogénéité thermique lors de la cuisson de la préforme, par exemple réalisé à l'aide d'un autoclave ou d'une étuve ; et
- il est notamment possible de rentrer plusieurs ensemble (outillages et préforme) dans un autoclave permettant ainsi de produire simultanément, avec un même cycle de chauffage, plusieurs conduits, diminuant ainsi les coûts de fabrication.

L'outillage, selon l'invention, peut comprendre une ou plusieurs des caractéristiques ci-dessous, prises isolément les unes avec les autres ou en combinaison les unes avec les autres :
- le socle est formé d'une seule pièce ;
- le corps comprend au moins neuf premières pièces qui s'étendent d'une extrémité à l'autre du corps, à savoir la première clef centrale et huit premières pièces périphériques réparties autour de la première clef centrale de sorte que les neuf premières pièces soient agencées en trois lignes et trois colonnes ;
- le conduit comportant en outre une dérivation reliée à la portion tubulaire, l'outillage comprend en outre un bras qui est en saillie sur le corps et qui est configuré pour être recouvert par au moins une nappe de fibres pour la réalisation de la dérivation ;
- le bras est réalisé par un ensemble de secondes pièces qui s'étendent d'une extrémité à l'autre du bras ; et
- l'ensemble de secondes pièces comprend une seconde clef centrale de démoulage destinée à être retirée en premier lors d'un démoulage du bras. L'invention concerne également un procédé de fabrication d'un conduit pour une turbomachine d'aéronef d'un outillage, tel que décrit ci-dessus, ce procédé comprenant les étapes consistant à :
   a) assembler ledit ensemble de premières pièces pour former ledit corps et emboîter une extrémité longitudinale de ce corps dans la partie centrale dudit socle,
   b) apposer des nappes de fibres sur le corps et la partie périphérique du socle,
   c) polymériser une résine imprégnée ou injecté sur les nappes de fibres, et
   d) démouler le conduit, qui comprend les sous-étapes de :
      i) démontage et retrait du socle vis-à-vis du corps,
      ii) retrait de la première clef centrale du corps,
      iii) retrait des autres premières pièces du corps.

Le procédé, tel que décrit ci-dessus, comprend en outre :
- à l'étape b), l'apposition de nappes de fibres sur le bras, et,
- à l'étape d), des sous-étapes de :
   - j) retrait de la seconde clef centrale du bras et
   - jj) retrait des autres secondes pièces de ce bras.

Le procédé, tel que décrit ci-dessus, comprend en outre :
- à l'étape c), la compression des nappes de fibres sur l'outillage au moyen d'un vide partiel réalisé entre l'outillage et une bâche à vide qui recouvre les nappes de fibres et l'outillage.

Le procédé, tel que décrit ci-dessus, présente les caractéristiques suivantes :
- les nappes sont en fibres de carbone et
- la résine est une résine époxy ou bismaléimide.

### Brève description des figures

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
[Fig.1] la figure 1 est une représentation schématique en section axiale d'une turbomachine à double flux selon l'invention, la turbomachine comprenant une vanne de décharge variable ;
[Fig.2] la figure 2 est une représentation schématique en perspective d'un étage d'un compresseur de la turbomachine comprenant une vanne de décharge variable ;
[Fig.3] la figure 3 est une représentation schématique en perspective d'une vanne de décharge variable ;
[Fig.4] la figure 4 est une représentation schématique en perspective d'un outillage selon l'invention ;
[Fig.5] la figure 5 est une représentation schématique en perspective de l'outillage assemblé ;
[Fig.6] la figure 6 est une représentation schématique en perspective d'un début de drapage d'une nappe de fibre sur l'outillage assemblé ;
[Fig.7] la figure 7 est une représentation schématique en perspective de l'outillage entourée d'une préforme, mis sous vide par une bâche à vide ;
[Fig.8] la figure 8 est une représentation schématique d'une préforme en matériau composite pour construire une vanne de décharge variable, située sur l'outillage ; et
[Fig.9] la figure 9 est une représentation schématique de l'outillage en cours de désassemblage après formation de la vanne de décharge variable.

### Description détaillée de l'invention

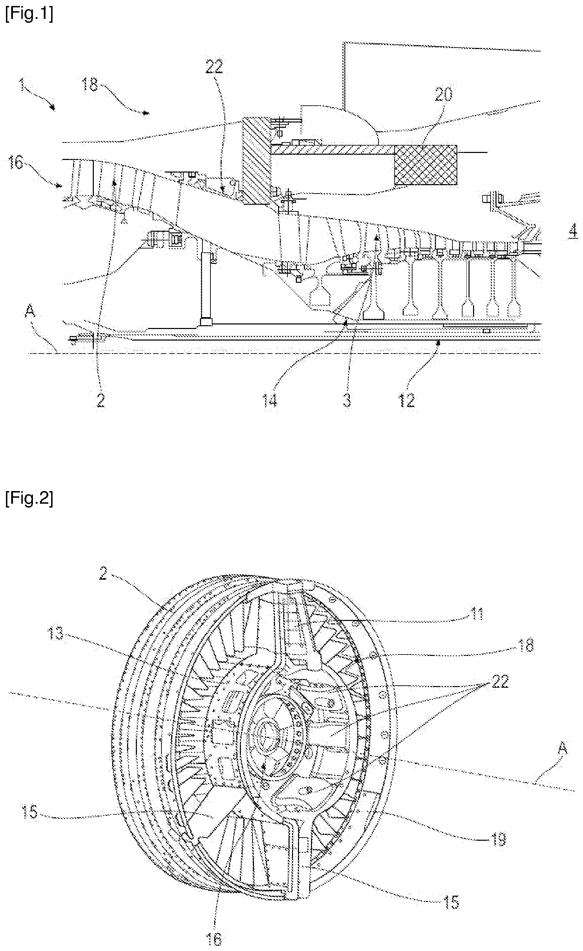

Sur la figure 1 est représentée une turbomachine double flux 1 destinée à équiper un aéronef. Une telle turbomachine 1 comprend généralement, d'amont en aval dans le sens de l'écoulement des gaz, une ou plusieurs soufflantes carénées puis un générateur de gaz comprenant un ou plusieurs étages de compresseur, basse pression 2 puis haute pression 3, une chambre de combustion 4, un ou plusieurs étages de turbine, haute pression puis basse pression, et une tuyère d'échappement des gaz. La soufflante, les turbines hautes et basse pression ainsi que la tuyère ne sont pas représentées sur la figure pour des raisons de clarté.

La turbomachine 1 comporte en outre, en s'éloignant de son axe principal A, un arbre basse pression 12, un arbre haute pression 14, une veine primaire 16 d'écoulement d'air agencée à l'intérieur du générateur de gaz, une veine secondaire 18 d'écoulement d'air s'étendant autour du générateur de gaz, et un échangeur de chaleur 20.

La ou les soufflante(s) sont configurées pour générer un flux primaire d'air dans la veine primaire 16, et un flux secondaire d'air dans la veine secondaire 18.

Comme représentée sur la figure 2, la turbomachine 1 comprend notamment un carter intermédiaire 11, monté entre le compresseur basse pression 2 et le compresseur haute pression. Le carter intermédiaire 11 comprend par exemple un moyeu 13, des bras 15 en particulier situés au niveau de la veine secondaire 18, et une virole 19. Les bras 15 relient le moyeu 13 à la virole 19.

Le générateur de gaz comprend en outre au moins un conduit 22. Trois conduits 22 sont en particulier visibles sur la figure 2. Les conduits 22 sont notamment situés à l'intérieur du carter intermédiaire 11 de la turbomachine, par exemple au niveau du moyeu 13 et en particulier dans un espace inter-veines, c'est-à-dire un espace situé entre la vaine primaire 16 et la vaine secondaire 18.

Ledit au moins un conduit 22 est notamment une vanne de décharge, en particulier une vanne de décharge variable VDV 22. Il s'agit par exemple de vannes de décharge variable des étages de compresseur basse pression 2. En effet, selon les phases de vol et pour des raisons d'opérabilité, il est nécessaire de décharger le compresseur basse pression 2, autrement dit d'évacuer, à l'aval de ce compresseur 2, du débit primaire vers la veine secondaire 18. Une telle décharge est réalisée par une trappe, ouverte par la ou les vanne(s) de décharge variable, ce qui permet à une partie de l'air de la veine primaire 16 d'aller vers la veine secondaire 18. De telles vannes de décharge variable jouent également parfois un rôle d'écopage de corps étrangers (tels que par exemple de la grêle ou des grêlons) avant le compresseur haute pression 3. Elles peuvent également, en cas de panne, permettre de protéger le flux secondaire d'une flamme pouvant remonter du flux primaire.

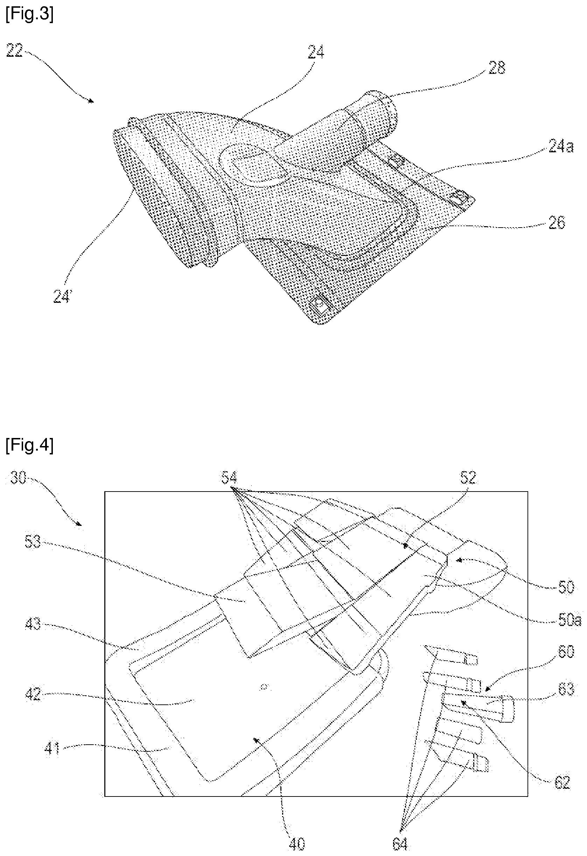

Un tel conduit 22 est représenté en perspective et de manière plus détaillée sur la figure 3. Le conduit 22 comporte une portion tubulaire incurvée 24 dont une extrémité 24a est reliée à un rebord périphérique 26. Le rebord périphérique 26 a une forme sensiblement rectangulaire. La portion tubulaire incurvée 24 comprend une surface interne 24' qui délimite le passage de l'air de la veine primaire 16 vers la veine secondaire 18 lorsque le conduit 22 est ouvert. En outre, le conduit 22 peut comporter une dérivation 28, notamment tubulaire, reliée à la portion tubulaire 24 du conduit 22. Cette dérivation 28 comprend également une surface interne (non représentée) qui délimite un passage de flux. La dérivation 28 est en particulier configurée pour alimenter l'échangeur de chaleur 20.

Un outillage de moulage 30 selon l'invention permettant de fabriquer le conduit 22 par moulage est représenté sur les figures 4, 5, 6. Cet outillage comporte en particulier un socle 40 et un corps 50.

Le socle 40 a une forme générale parallélépipédique et comprend une surface supérieure 41. Cette surface supérieure 41 comprend une partie centrale 42 qui est évidée et une partie périphérique 43. La partie périphérique 43 est configurée pour être recouverte par au moins une nappe de fibres 80 pour la réalisation du rebord périphérique 26 du conduit 22. La nappe de fibres 80 est par exemple drapée sur le socle 40. Selon un mode de réalisation de l'invention, le socle 40 est formé d'une seule pièce. Le corps 50 a une forme générale allongée et incurvée et comporte une extrémité longitudinale 50a qui vient s'emboîter de manière amovible dans la partie centrale 42 du socle 40, qui est évidée pour correspondre à l'extrémité longitudinale 50a. Le corps 50 est configuré pour être recouvert par au moins une nappe de fibres 81 pour la réalisation de la portion tubulaire 24 du conduit 22. La nappe de fibres 81 est par exemple drapée sur le corps 50.

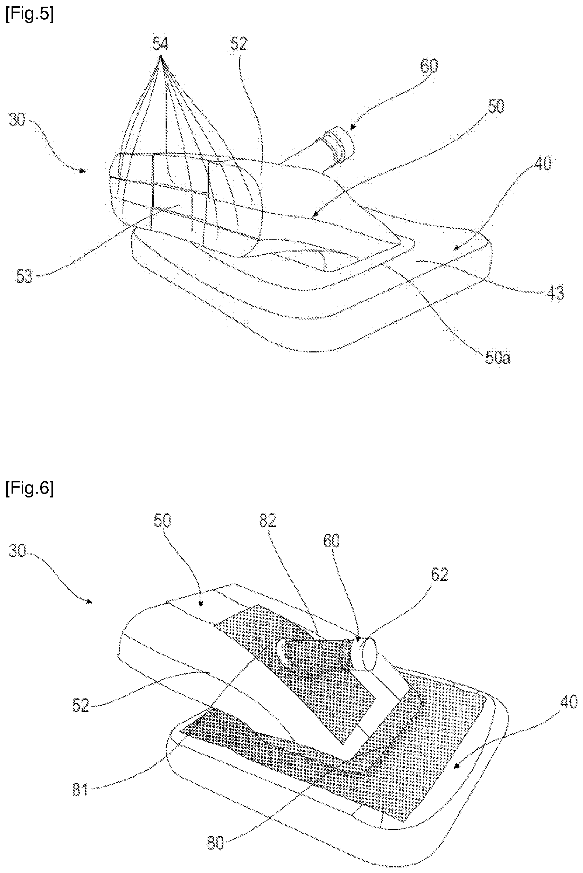

Les nappes de fibres 80, 81 sont alors par exemple injectées d'une résine polymérisable de manière à former une préforme en matériaux composites. Le corps 50 est réalisé par un ensemble de premières pièces 52 qui sont montées de manière ajustée les unes contre les autres. Le corps 50 comprend notamment au moins neuf premières pièces 52. Chacune des neuf premières pièces 52 s'étend d'une extrémité à l'autre du corps 50. Ces neuf premières pièces 52 comprennent une première clef centrale 53 et huit premières pièces périphériques 54 réparties autour de la première clef centrale 53 de sorte que les neuf pièces 52 sont agencées en trois lignes et trois colonnes, comme visible sur la figure 5. La première clef centrale 53 se trouve donc sur la deuxième ligne et la deuxième colonne. Cette première clef centrale 53 de démoulage est configurée pour être retirée en premier lors d'un démoulage du corps 50. En effet, lorsque la préforme en matériaux composites est polymérisée formant ainsi le conduit 22, ou avant injection de résine dans les nappes de fibres 80, 81, il est nécessaire de séparer le corps 50 de la partie centrale évidée 42 du socle 40 et de retirer la première clef centrale 53, en particulier dans un mouvement d'extraction selon une direction parallèle à l'extension longitudinale du corps 50. Il est ensuite facile de retirer les huit premières pièces périphériques 54, notamment dans un mouvement d'extraction selon une direction parallèle à l'extension longitudinale du corps 50, pour libérer l'espace interne de la portion tubulaire incurvée 24 du conduit 22. Le démoulage du conduit 22 est ainsi particulièrement simple car une seule pièce, la première clef centrale 53, maintient toutes les autres.

L'outillage 30 comprend en outre un bras 60 qui est en saillie sur le corps 50 et qui est configuré pour être recouvert par au moins une nappe de fibres 82 pour la réalisation de la dérivation 28. La nappe de fibres 82 est par exemple drapée sur le bras 60. Ce bras 60 est réalisé par un ensemble de secondes pièces 62 qui s'étendent d'une extrémité à l'autre du bras 60. L'ensemble de secondes pièces 62 comprend une seconde clef centrale 63 de démoulage destinée à être retirée en premier lors d'un démoulage du bras 60 et fonctionnant de manière similaire à la première clef centrale 53. Ces secondes pièces 62 comprennent la seconde clef centrale 63 et des secondes pièces périphériques 64, par exemple quatre secondes pièces périphériques 64 agencées autour de la seconde clef centrale 63. Lorsque la préforme en matériaux composites est polymérisée ou avant injection de résine sur la nappe de fibre 82, il est nécessaire de retirer la seconde clef centrale 63 du bras 60 pour pouvoir ensuite facilement retirer les secondes pièces périphériques 64 et libérer l'espace interne de la dérivation 28 du conduit 22.

La libération de la seconde clef centrale 63 et ensuite des secondes pièces périphériques 64 se fait notamment dans un mouvement d'extraction selon une direction parallèle à l'extension longitudinale du bras 60.

Les secondes pièces 62 sont par exemple fixées de manière amovible au corps 50, en particulier au niveau d'une extrémité longitudinale 62a des secondes pièces 62.

Le conduit 22 peut ainsi être fabriqué :
- en drapant les nappes de fibres 80, 81, 82 sur le socle 40, le corps 50 et éventuellement le bras 60 ;
- en injectant une résine de manière à former la préforme en matériau composite ;
- en chauffant la préforme de manière à la polymériser et former le conduit 22 ; et
- en retirant le corps 50 du socle 40 puis du conduit 22 et éventuellement en retirant le bras 60 du conduit 22 comme expliqué précédemment.

Alternativement, l'injection de résine puis le chauffage peuvent être réalisés après avoir retiré l'outillage 30 des nappes de fibres 80, 81, 82.

Par ailleurs, dans un mode de réalisation où les nappes de fibres 80, 81, 82 sont préimprégnés de résine, l'étape d'injection n'est pas nécessaire.

Le socle 40, le corps 50 et le bras 60 sont en particulier rigide rendant de la sorte l'outillage 30 rigide. Grâce à cette rigidité, la surface interne de la préforme, c'est-à-dire la surface interne du conduit 22, qui est contre le corps 50 et le bras 60, sera ainsi lisse et aura exactement la forme voulue, évitent ainsi en particulier les problèmes aérodynamiques de l'art antérieur. De plus, le drapage se faisant après avoir assemblé l'outillage 30 (socle 40, corps 50 et bras 60), ce dernier ne peut pas bouger pendant le moulage du conduit 22, et les contraintes dimensionnelles et de formes sont respectées. L'outillage 30 de l'invention permet ainsi de maitriser la géométrie finale du conduit 22 car son positionnement à l'intérieur du conduit permet de garantir la reproductibilité de la forme du conduit 22.

Par ailleurs la cuisson de la préforme se réalise par exemple à l'aide d'une étuve ou d'un autoclave (système de chauffage déporté). L'outillage 30 a ainsi une masse très inférieure à celle de l'art antérieur. En outre, chaque premières pièces 52 et/ou secondes pièces 62 peut notamment être creuse, diminuant ainsi davantage la masse et facilitant grandement sa manutention.

En outre, l'outillage 30 se trouvant à l'intérieur de la préforme, et le système de chauffage étant déporté, l'invention permet d'assurer une meilleure homogénéité thermique lors de la fabrication du conduit 22.

Également, plusieurs outillages 30 peuvent rentrer dans un autoclave, ce qui permet de fabriquer simultanément plusieurs conduits 22, avec un même cycle de chauffage, réduisant ainsi les temps et les coûts de fabrication. L'outillage 30, comportant notamment entre 10 et 18 pièces suivant le type de conduit 22 à fabriquer, il est possible de remplacer individuellement les pièces de l'outillage 30 qui seraient abimées.

L'invention concerne également un procédé de fabrication du conduit 22 pour la turbomachine d'aéronef 1, au moyen de l'outillage 30, tel que décrit ci-dessus.

Le procédé comprend en particulier une étape a) consistant à assembler l'ensemble de premières pièces 52 pour former le corps 50 (figure 4). L'extrémité longitudinale 50a de ce corps 50 est ensuite emboîtée dans la partie centrale 42 du socle 40 (figure 5).

Le procédé comprend notamment une étape b) (figure 6) consistant à apposer les nappes de fibres 80, 81 sur le corps 50 et sur la partie périphérique 43 du socle 40. Le procédé comprend en outre l'apposition des nappes de fibres 82 sur le bras 60.

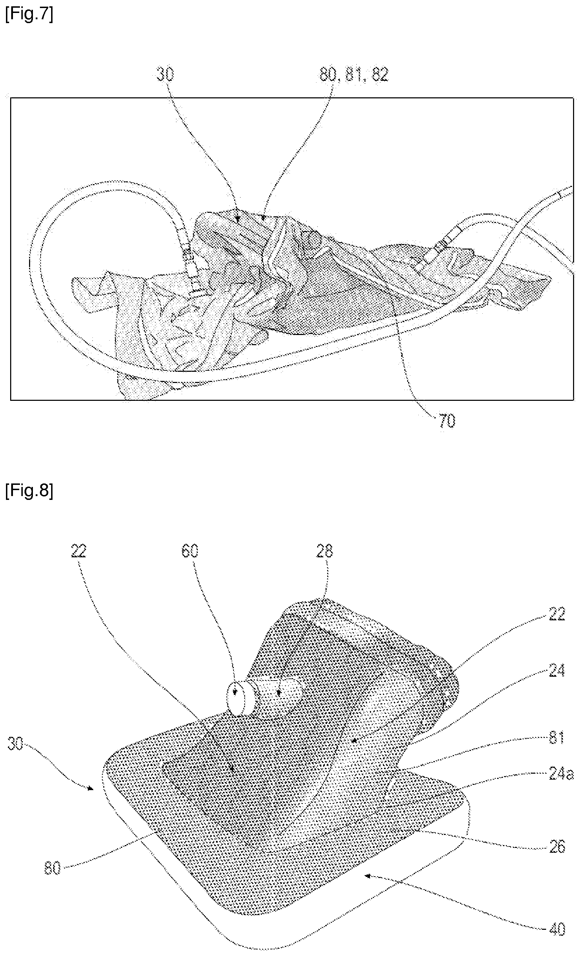

Le procédé comprend en particulier une étape c) consistant à polymériser une résine imprégnée ou injectée sur les nappes de fibres 80, 81, 82. Le procédé comprend en outre (figure 7) la compression des nappes de fibres 80, 81, 82 sur l'outillage 30 au moyen d'un vide partiel. Pour réaliser ce vide partiel, une bâche à vide 70 est disposée pour recouvrir les nappes de fibres 80, 81, 82 disposées sur l'outillage 30. Le vide partiel est donc réalisé entre l'outillage 30 et la bâche à vide 70. Alternativement, une membrane souple est utilisée à la place de la bâche à vide 70. La membrane souple peut être en silicone thermoformé. Elle peut être elle-même thermo-chauffée indépendamment.

La bâches à vide 70 et/ou la membrane souple sont ainsi utilisés pour permettre de tirer le vide et mettre en cuisson la préforme en matériaux composites.

Le conduit 22 est ainsi réalisé (figure 8) et est ici une vanne de décharge variable.

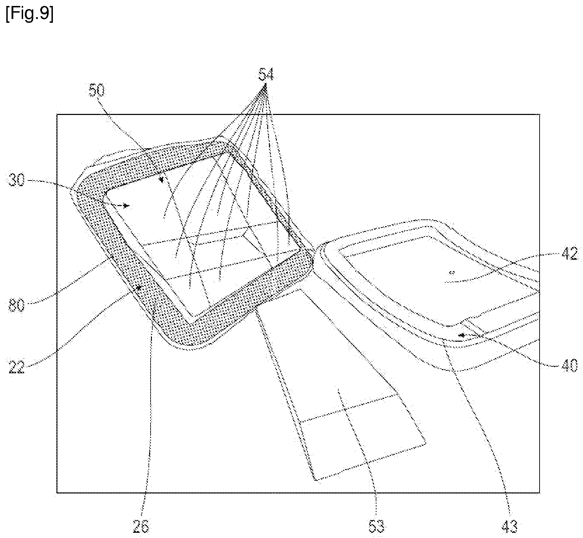

Le procédé comprend par exemple une étape d) (figure 9) consistant à démouler le conduit 22. Le procédé comprend notamment à cette étape une sous-étape i) consistant à démonter et retirer le socle 40 vis-à-vis du corps 50. Cette sous-étape est suivie en particulier d'une sous-étape ii) consistant à retirer la première clef centrale 53 du corps 50. La clef centrale 53 doit en effet être retirée en premier pour pouvoir déverrouiller toutes les huit autres premières pièces 54. La première clef centrale 53 a une géométrie particulière qui lui permet d'être retirées des huit autres premières pièces 54 sans difficultés, à l'aide par exemple d'angles de dépouilles. Cette extraction de la clef centrale 53, se fait par exemple selon une direction parallèle à l'extension longitudinale du corps 50.

Après la sous-étape ii), le procédé comprend en outre une sous-étape iii) consistant à retirer les autres premières pièces 54 du corps 50. Le procédé comprend notamment, à l'étape d), une sous-étape j) consistant à retirer la seconde clef centrale 63 du bras 60. Cette sous-étape j) est en particulier suivie d'une sous-étape jj) consistant à retirer les autres secondes pièces, c'est-à-dire notamment les secondes pièces périphériques 64 de ce bras 60. La seconde clef centrale 63 a une géométrie particulière qui lui permet d'être retirées des quatre autres secondes pièces 64 sans difficultés, à l'aide par exemple d'angles de dépouilles.

Les nappes 80, 81, 82 sont en particulier en fibres de carbone et la résine est une résine époxy ou bismaléimide. Le conduit 22 peut notamment également être réalisé à partir de verre ou aramide injectés de résine époxy ou bismaléimide, et/ou de pré-imprégnés de fibre de carbone, verre ou aramide.

L'étanchéité à l'air et la résistance mécanique du conduit 22 réalisé selon le procédé de la présente invention présente des résultats concluants. En effet, le conduit 22 reste étanche à un niveau de pression élevé, notamment de 2,5 bars, ce qui est supérieur au niveau de pression des conduits réalisés selon l'art antérieur. Cette amélioration permet d'envisager une redéfinition des épaisseurs du conduit 22, afin de diminuer le poids ou optimiser ce conduit 22.

L'outillage 30 et le procédé selon la présente invention permettent ainsi notamment de faciliter le démoulage et la manipulation et de réduire la masse (notamment en utilisant des pièces de l'outillage 30 creuses).

En outre, l'outillage 30 et le procédé selon l'invention permettent également d'assurer un bon maintien de l'outillage 30 lors de la fabrication du conduit 22, permettant ainsi d'améliorer et de respecter les tolérances géométriques et la santé matière, et notamment d'améliorer la surface interne du conduit 22 (portion tubulaire 24 et dérivation 28), améliorant ainsi l'aérodynamique des surfaces de contact avec le flux interne d'air moteur et évitant une intervention supplémentaire pour rectifier la surface interne du conduit 22.

La santé matière est en outre améliorée par la facilité de drapage, par l'absence de jeu important entre les premières pièces et les secondes pièces de l'outillage mais également par l'application de la pression par l'extérieur à l'aide d'une bâche à vide, ajustée au mieux en fonction de la forme de la pièce.

L'invention permet ainsi de diminuer les dérogations et de diminuer les coûts de fabrication du conduit 22, notamment car l'outillage demandent moins de matière pour être fabriqués et est d'un emploi plus simple, en particulier d'un point de vue du montage, du nettoyage et des réparations. L'invention offre ainsi de nombreux avantages et en particulier :
- L'outillage de moulage 30 étant rigide, la surface interne 24' du conduit 22 va prendre l'aspect de l'outillage de moulage 30 garantissant en particulier la qualité de la surface aérodynamique de la surface interne 24' du conduit 22.
- Le socle 40 et le corps 50 étant disposés avant le drapage de la nappe de fibre 80, 81, 82, il n'est pas nécessaire de refermer un moule après le drapage comme dans l'art antérieur. L'outillage de moulage 30 ne peut donc pas bouger lors de la fabrication du conduit 22, ce qui entraine en particulier le respect des contraintes dimensionnelles et de formes du conduit 22.
- La cuisson de la préforme étant effectuée à l'aide d'une étuve ou d'un autoclave, l'outillage de moulage 30 ne comprend pas de système de chauffage intégré, ce qui entraine une diminution importante de la masse de l'outillage de moulage 30 de l'invention. De plus, chaque partie de l'outillage de moulage 30 peut notamment être creuse pour optimiser davantage sa masse. Par ailleurs, du fait d'une masse réduite, la manutention de l'outillage de moulage 30 est grandement facilitée.
- La réduction de la masse de l'outillage de moulage 30, la position de l'outillage de moulage 30 à l'intérieur de la préforme et la position déportée du système de chauffage (étuve ou autoclave) permettent chacune d'assurer une meilleure homogénéité thermique lors de la cuisson de la préforme.
- Plusieurs outillages de moulage 30 peuvent rentrer dans un autoclave et donc plusieurs conduits 22 peuvent être produits simultanément, avec un même cycle de chauffage, réduisant les temps et les couts de fabrication.
- Le corps 50 comprenant une pluralité de pièces 52, 62 distinctes, une partie abimée de l'outillage de moulage 22 peut être remplacée individuellement sans devoir remplacer l'ensemble de l'outillage de moulage 30.
- Le démoulage de l'outillage de moulage 30 est plus simple car une seule pièce, la clef centrale 53, permet de maintenir toutes les autres en place.
- La santé matière est améliorée par la facilité de drapage, par l'absence de jeu important entre les parties du moule mais également par l'application de la pression par l'extérieur à l'aide de la bâche à vide, ajustée au mieux en fonction de la forme de la préforme. Par exemple, dans le cas d'une création d'oreilles, il sera nécessaire de placer un surplus de bâche à vide.

L'utilisation de cet outillage de moulage 30 répond à la fois au besoin de faciliter la mise en œuvre mais également au besoin d'améliorer la qualité globale du conduit 22.

Un gain de coût peut également être perçu car l'outillage de moulage 30 demandent moins de matière pour être fabriqués et les différentes pièces de l'outillage de moulage 30 sont d'un emploi plus simple notamment en termes de montage, nettoyage, réparation, etc.

La géométrie du socle 40 et du corps 50 de l'outillage de moulage 30 a été déterminée dans le but d'assurer notamment :
- La facilité de démoulage et de manipulation ;
- Le bon maintien de l'outillage de moulage 30 lors de la fabrication du conduit 22 afin de respecter les tolérances géométriques ; et
- L'amélioration de la santé matière et de l'aspect aérodynamique de la surface interne 24' du conduit 22.

L'invention permet donc en particulier de :
- Garantir une surface aérodynamique lisse, sans perturbation du flux interne.
- Garantir une santé matière.
- Améliorer la manutention de l'outillage de moulage 30 dans son ensemble ainsi que faciliter ses éventuelles réparations.
- Faciliter le démoulage.
- Faciliter la mise en œuvre et la fabrication du conduit 22.
- Réduire les couts de fabrication (absence de rectification interne du conduit 22) et réduction du coût de l'outillage de moulage 30.
- Maitriser la géométrie finale car le positionnement de l'outillage de moulage 20 permet de garantir la reproductibilité de la forme.

La présente invention peut être utilisée dans le domaine de l'aéronautique mais également dans celui des composites en général, en particulier dans le domaine des pièces injectées ou drapées creuses.

## Revendications

1. Outillage de moulage (30) d'un conduit (22) pour une turbomachine d'aéronef (1), le conduit (22) étant réalisé en matériau composite à base de fibres et comportant une portion tubulaire (24) incurvée dont une extrémité (24a) est reliée à un rebord périphérique (26), cet outillage (30) comportant :
- un socle (40) qui a une forme générale parallélépipédique et dont une surface supérieure (41) comprend une partie centrale (42) évidée et une partie périphérique (43) configurée pour être recouverte par au moins une nappe de fibres (80) pour la réalisation du rebord périphérique (26) du conduit (22),
- un corps (50) de forme générale allongée et incurvée, ce corps (50) étant configuré pour être recouvert par au moins une nappe de fibres (81) pour la réalisation de la portion tubulaire (24) du conduit (22),
**caractérisé en ce que** ce corps (50) comporte une extrémité longitudinale (50a) emboîtée de manière amovible dans la partie centrale (42) du socle (40) et, **en ce qu'**il est réalisé par un ensemble de premières pièces (52) qui sont montées de manière ajustée les unes contre les autres et qui comprennent une première clef centrale (53) de démoulage qui s'étend d'une extrémité à l'autre du corps (50) et qui est configurée pour être retirée en premier lors d'un démoulage du corps (50).

2. Outillage (30) selon la revendication 1, dans lequel le socle (40) est formé d'une seule pièce.

3. Outillage (30) selon la revendication 1 ou 2, dans lequel le corps (50) comprend au moins neuf premières pièces (52) qui s'étendent d'une extrémité à l'autre du corps (50), à savoir la première clef centrale (53) et huit premières pièces périphériques (54) réparties autour de la première clef centrale (53) de sorte que les neuf premières pièces (52) soient agencées en trois lignes et trois colonnes.

4. Outillage (30) selon l'une des revendications précédentes, dans lequel, le conduit (22) comportant en outre une dérivation (28) reliée à la portion tubulaire (24), l'outillage (30) comprend en outre un bras (60) qui est en saillie sur le corps (50) et qui est configuré pour être recouvert par au moins une nappe de fibres (82) pour la réalisation de la dérivation (28).

5. Outillage (30) selon la revendication 4, dans lequel le bras (60) est réalisé par un ensemble de secondes pièces (62) qui s'étendent d'une extrémité à l'autre du bras (60).

6. Outillage (30) selon la revendication 5, dans lequel l'ensemble de secondes pièces (62) comprend une seconde clef centrale de démoulage (63) destinée à être retirée en premier lors d'un démoulage du bras (60).

7. Procédé de fabrication d'un conduit (22) pour une turbomachine d'aéronef (1), au moyen d'un outillage (30) selon l'une des revendications précédentes, dans lequel il comprend les étapes consistant à :
a) assembler ledit ensemble de premières pièces (52) pour former ledit corps (50) et emboîter une extrémité longitudinale (50a) de ce corps (50) dans la partie centrale (42) dudit socle (40),
b) apposer des nappes de fibres (80, 81) sur le corps (50) et le partie périphérique (43) du socle (40),
c) polymériser une résine imprégnée ou injectée sur les nappes de fibres (80, 81), et
d) démouler le conduit (22), qui comprend les sous-étapes de :
i) démontage et retrait du socle (40) vis-à-vis du corps (50),
ii) retrait de la première clef centrale (53) du corps (50),
iii) retrait des autres premières pièces (54) du corps (50).

8. Procédé selon la revendication 7, l'outillage (30) étant tel que défini à la revendication 6, le procédé comprend, à l'étape b), l'apposition de nappes de fibres (82) sur le bras (60), et, à l'étape d), des sous-étapes de j) retrait de la seconde clef centrale (63) du bras (60) et jj) retrait des autres (64) secondes pièces (62) de ce bras (60).

9. Procédé selon la revendication 7 ou 8, dans lequel il comprend, à l'étape c), la compression des nappes de fibres (80, 81, 82) sur l'outillage (30) au moyen d'un vide partiel réalisé entre l'outillage (30) et une bâche à vide (70) qui recouvre les nappes de fibres (80, 81, 82) et l'outillage (30).

10. Procédé selon l'une des revendications 7 à 9, dans lequel les nappes (80, 81, 82) sont en fibres de carbone et la résine est une résine époxy ou bismaléimide.

## Patentansprüche

1. Werkzeug (30) zum Formen eines Kanals (22) für ein Turbotriebwerk eines Luftfahrzeugs (1), wobei der Kanal (22) aus Kompositmaterial auf Faserbasis hergestellt ist und einen gekrümmten röhrenförmigen Anschnitt (24) umfasst, von dem ein Ende (24a) mit einem umlaufendem Rand (26) verbunden ist, wobei dieses Werkzeug (30) Folgendes umfasst:
- einen Sockel (40), der eine allgemein parallelepipedische Form aufweist und von dem eine obere Oberfläche (41) ein ausgespartes mittleres Teil (42) und ein umlaufendes Teil (43) beinhaltet, das konfiguriert ist, um zur Herstellung des umlaufenden Rands (26) des Kanals (22) durch mindestens eine Faserbahn (80) bedeckt zu werden,
- einen Körper (50) von allgemein länglicher und gekrümmter Form, wobei der Körper (50) konfiguriert ist, um zur Herstellung des röhrenförmigen Abschnitts (24) des Kanals (22) durch die mindestens eine Faserbahn (81) bedeckt zu werden,
**dadurch gekennzeichnet, dass** der Körper (50) ein längsgerichtetes Ende (50a) umfasst, das auf herausnehmbare Weise in dem mittleren Teil (42) des Sockels (40) eingesteckt ist, und dadurch, dass er durch eine Baugruppe erster Stücke (52) hergestellt ist, die auf eine aneinander passende Weise montiert sind und die einen ersten mittleren Entformungsschlüssel (53) beinhalten, der sich von einem Ende des Körpers (50) zum anderen erstreckt und der konfiguriert ist, um bei einer Entformung des Körpers (50) als erstes entnommen zu werden.

2. Werkzeug (30) nach Anspruch 1, wobei der Sockel (40) aus einem einzigen Stück gebildet ist.

3. Werkzeug (30) nach Anspruch 1 oder 2, wobei der Körper (50) mindestens neun erste Stücke (52) beinhaltet, die sich von einem Ende des Körpers (50) zum anderen erstrecken, nämlich den ersten mittleren Entformungsschlüssel (53) und um den ersten mittleren Entformungsschlüssel (53) derart herum verteilte acht erste umlaufende Stücke (54), dass die neun ersten Stücke (52) in drei Zeilen und drei Spalten angeordnet sind.

4. Werkzeug (30) nach einem der vorstehenden Ansprüche, wobei der Kanal (22) weiter eine mit dem röhrenförmigen Abschnitt (24) verbundene Umleitung umfasst, wobei das Werkzeug (30) weiter einen Arm (60) beinhaltet, der auf dem Körper (50) hervorsteht und der konfiguriert ist, um zur Herstellung der Umleitung (28) durch mindestens eine Faserbahn (82) bedeckt zu werden.

5. Werkzeug (30) nach Anspruch 4, wobei der Arm (60) aus einer Baugruppe zweiter Stücke (62) hergestellt ist, die sich von einem Ende des Arms (60) zum anderen erstrecken.

6. Werkzeug (30) nach Anspruch 5, wobei die Baugruppe zweiter Stücke (62) einen zweiten mittleren Entformungsschlüssel (63) beinhaltet, der dazu bestimmt ist, bei einer Entformung des Arms (60) als erstes entfernt zu werden.

7. Verfahren zur Anfertigung eines Kanals (22) für ein Turbotriebwerk eines Luftfahrzeugs (1) mittels eines Werkzeugs (30) nach einem der vorstehenden Ansprüche, wobei es die Schritte beinhaltet, bestehend aus:
a) Zusammenbauen der Baugruppe erster Stücke (52) zum Bilden des Körpers (50) und Einstecken eines längsgerichteten Endes (50a) des Körpers (50) in das mittlere Teil (42) des Sockels (40),
b) Anbringen der Faserbahnen (80, 81) auf den Körper (50) und das umlaufende Teil (43) des Sockels (40),
c) Polymerisieren eines auf die Faserbahnen (80, 81) imprägnierten oder eingespritzten Harzes, und
d) Entformen des Kanals (22), was die Teilschritte beinhaltet der:
i) Demontage und der Entnahme des Sockels (40) gegenüber des Körpers (50),
ii) Entnahme des ersten mittleren Schlüssels (53) des Körpers (50),
iii) Entnahme der anderen ersten Stücke (54) des Körpers (50).

8. Verfahren nach Anspruch 7, wobei das Werkzeug (30) wie in Anspruch 6 definiert ist, wobei das Verfahren in dem Schritt b), der Anbringung von Faserbahnen (82) auf den Arm (60), und in dem Schritt d) die Teilschritte der j) Entnahme des zweiten mittleren Schlüssels (63) des Arms (60) und jj) Entnahme der anderen (64) zweiten Stücke (62) des Arms (60) beinhaltet.

9. Verfahren nach Anspruch 7 oder 8, wobei es in dem Schritt c) die Kompression der Faserbahnen (80, 81, 82) auf dem Werkzeug (30) mittels eines zwischen dem Werkzeug (30) und einer Vakuumabdeckung (70), die die Faserbahnen (80, 81, 82) und das Werkzeug (30) bedeckt, hergestellten Teilvakuums beinhaltet.

10. Verfahren nach einem der Ansprüche 7 bis 9, wobei die Bahnen (80, 81, 82) aus Kohlenstofffasern bestehen und das Harz ein Epoxid- oder Bismaleimidharz ist.

## Claims

1. A tool (30) for molding a duct (22) for an aircraft turbine engine (1), the duct (22) being made of a fiber-based composite material and comprising a curved tubular portion (24), one end (24a) of which is connected to a peripheral rim (26), this tool (30) comprising:
- a basement (40) which has a generally parallelepiped shape and an upper surface (41) of which comprises a central recessed portion (42) and a peripheral portion (43) configured to be covered by at least one fiber lap (80) to form the peripheral rim (26) of the duct (22),
- a body (50) of generally elongated and curved shape and comprising a longitudinal end (50a) removably fitted into the central portion (42) of the basement (40), this body (50) being configured so as to be covered by at least one lap of fibers (81) for producing the tubular portion (24) of the duct (22), this body (50) being produced by an assembly of first parts (52) which are mounted so as to fit against one another and which comprise a first central demolding key (53) which extends from one end of the body (50) to the other and which is configured so as to be removed first when the body (50) is demolded.

2. The tool (30) as claimed in claim 1, wherein the basement (40) is formed in one-part.

3. The tool (30) according to claim 1 or 2, wherein the body (50) comprises at least nine first parts (52) which extend from one end of the body (50) to the other, namely the first central key (53) and eight first peripheral parts (54) distributed around the first central key (53) so that the nine first parts (52) are arranged in three rows and three columns.

4. The tool (30) according to one of the preceding claims, wherein, the duct (22) further comprising a bypass (28) connected to the tubular portion (24), the tool (30) further comprises an arm (60) which projects from the body (50) and which is configured so as to be covered by at least one fiber lap (82) for producing the bypass (28).

5. The tool (30) according to claim 4, wherein the arm (60) is made by an assembly of second parts (62) which extend from one end of the arm (60) to the other.

6. The tool (30) according to claim 5, wherein the assembly of second parts (62) comprises a second central demolding key (63) configured to be removed first when the arm (60) is demolded.

7. A method for manufacturing a duct (22) for an aircraft turbine engine (1), by means of a tool (30) according to one of the preceding claims, wherein it comprises the steps of:
a) assembling said assembly of first parts (52) to form said body (50) and fitting a longitudinal end (50a) of this body (50) into the central portion (42) of said basement (40),
b) affixing fiber laps (80, 81) to the body (50) and to the peripheral portion (43) of the basement (40),
c) polymerizing a resin impregnated or injected onto the fiber laps (80, 81), and
d) demolding the duct (22), which comprises the sub-steps of:
(i) dismantling and removing the basement (40) from the body (50),
(ii) removing the first central key (53) from the body (50),
(iii) removing the other first parts (54) from the body (50).

8. The method according to claim 7, the tool (30) being as defined in claim 6, the method comprising, in step b), affixing fiber laps (82) to the arm (60), and, in step d), sub-steps of j) removing the second central key (63) from the arm (60) and jj) removing the other (64) second parts (62) from this arm (60).

9. The method according to claim 7 or 8, wherein it comprises, in step c), compressing the fiber laps (80, 81, 82) on the tool (30) by means of a partial vacuum produced between the tool (30) and a vacuum bag (70) which covers the fiber laps (80, 81, 82) and the tool (30).

10. The method according to one of claims 7 to 9, wherein the laps (80, 81, 82) are made of carbon fibers and the resin is an epoxy or bismaleimide resin.
